# EUROPEAN PATENT SPECIFICATION

(11) **EP 3 885 814 B1**
(45) Date of publication and mention of the grant of the patent: **16.10.2024**
(21) Application number: 19886869.7
(22) Date of filing: 22.11.2019
(51) Int. Cl.: G02B 21/36, H04N 23/57, H04N 23/62, H04N 23/63, H04N 23/65, H04N 23/67

(54) **INTELLIGENT PHOTOGRAPHIC MICROSCOPE SYSTEM**
INTELLIGENTES FOTOGRAFISCHES MIKROSKOPSYSTEM
SYSTÈME DE MICROSCOPE PHOTOGRAPHIQUE INTELLIGENT

(30) Priority: 22.11.2018 CN 201821932903 U
(43) Date of publication of application: 29.09.2021
(73) Proprietor: Carl Zeiss Microscopy GmbH, 07745 Jena (DE)
(72) Inventor: QIANG, Luying, Shanghai 200131 (CN); GUO, Weiqiang, Shanghai 200131 (CN); CAI, Lei, Shanghai 200129 (CN); WAN, Zheng, Shanghai 200127 (CN); WANG, Hexin, 89551 Koenigsbronn (DE); GOEGLER, Michael, 82515 Wolfratshausen (DE); XU, Shukuan, Shanghai 200131 (CN)
(74) Representative: Charrier Rapp & Liebau
(86) International application number: PCT/CN2019/120356
(87) International publication number: WO 2020/103949

(56) References cited:
- EP-A1- 3 401 721
- CN-A- 1 536 387
- CN-A- 103 702 027
- CN-A- 105 301 754
- CN-U- 205 750 091
- CN-U- 208 969 331
- DE-A1- 102017 105 103
- US-A1- 2009 148 153
- US-A1- 2011 292 077
- US-A1- 2016 231 548
- US-A1- 2016 291 257
- US-A1- 2017 285 320

## Description

### Technical Field

The invention relates to the photo-microscopy field, and more particularly to a smart photo-microscope system according to the preamble portion of claims 1 and 8, respectively.

### Background Art

Microscopes are used in many disciplines such as medicine, biology but also industry. Efficiency, ease of use, and price are main drivers, especially for users of routine microscopes. A large portion of commonly used microscope systems are manual microscopes in a price range of several thousand euros. Also in this microscope class, digital documentation is becoming increasingly important in routine microscopy. Very often users only want to take an image of the visualized sample quickly. However, even such a "simple" task can be cumbersome and error-prone on manual microscopes, since one has to adjust/define certain settings on the camera and/or microscope. Users typically have to define the magnification and the fluorescence channel they currently use when an image is acquired. Furthermore they have to use a proper white balance and set the exposure time and other parameters on the camera which affect the image. This also includes the gamma value, contrast or brightness.

For the photo-microscope system mentioned above, it is usually necessary to buy a computer (especially, PC) and additional software to drive a camera and/or the microscope, which can substantially add to the costs of the whole microscope system. Current commercial photo-microscope systems on the market need to install software on a computer that is hooked up to a microscope and camera (and maybe other devices/accessories). The software is then in control or receives information of the different parts of the photo-microscope system.

For motorized microscopes, the camera is merely an image collection device. Both the microscope and the camera are simultaneously connected to a PC, which is used as a control interface: the microscope sends data to the PC, the camera sends image data to the PC, while the PC analyzes the data, generates a shading corrected image with a scale bar, for example, and outputs the image to the user. The PC may also send commands, such as those for auto-focusing and panning, to the camera and microscope.

In case of manual microscopes, the software (computer) is only connected to and controls the camera, while is not connected to the microscope. Here one still has to provide necessary parameters (like magnification) manually and a separate computer is also required.

Apart from the additional costs, the footprint of a photo-microscope system also increases significantly due to the need for computer and software. However, in working environment doing routine microscopy, space is often extremely limited. Therefore, a big portion of photo-microscope users are looking for compact microscope system solutions that allow them to document their samples with high ease of use without disturbing their general workflow. They also expect that such a system prevents errors and comes at an affordable price.

US 2017/285320 A1 discloses an automated slide scanning system, comprising one or more optical elements, including an objective, having an optical path configured to be disposed within view of a camera of a portable device. An automated stage disposed within the optical path, the automated stage comprising a platform configured for receiving a slide containing a biological sample and having a drive mechanism for translating the stage in at least one direction with respect to said objective. A communications interface coupled to the automated stage, and is configured for receiving a command from the portable device to control operation of the mechanical stage.

US 2011/292077 A1 discloses a method of displaying an image of a physical page relative to which a handheld display device is positioned. The method includes the steps of: capturing an image of the physical page using an image sensor of the device; determining a page identity for the physical page; retrieving a page description corresponding to the page identity; rendering a page image based on the retrieved page description; estimating a first pose of the device relative to the physical page; estimating a second pose of the device relative to a user's viewpoint; determining a projected page image for display by the device; and displaying said projected page image on a display screen of said device. The display screen provides a virtual transparent viewport onto the physical page irrespective of a position and orientation of the device relative to the physical page.

US 2016/231548 A1 discloses acompact microscope apparatus and methods of use, whereby one apparatus includes a stage, a light source, an objective, a dichroic element, and an imaging sensor. The stage is configured to hold a sample thereon. The light source is configured to emit light toward the stage. The objective is positioned to focus light from the stage. The dichroic element is configured to pass or reflect respective ones of the light emitted by the light source and the light from the stage. The imaging sensor is positioned to receive the light from the stage. The stage, the light source, the objective, the dichroic element, and the imaging sensor are arranged such that they may be received within an enclosure having dimensions no longer than about 300 mm. The apparatus may include a clinostat operable to continuously rotate the components of the apparatus about an axis.

EP 3 401 721 A discloses an apparatus for scanning microscope slides is provided. The apparatus comprises an objective; a specimen stage; a camera sensor configured to capture a first plurality of images at a first rate while focus is changed in continuous motion; and a flash unit configured to flash at a second rate, wherein the first rate and the second rate are synchronized.

### Summary of the Invention

The invention aims to solve one or more of the above and other problems in the prior art.

According to a first aspect of the invention, a smart photo-microscope system is provided which comprises: A smart photo-microscope system, comprising: a microscope; and a camera attached to the microscope to photograph a microscope sample, the camera including a built-in processor and an image sensor, and being connected with the microscope to receive and process information from the microscope, wherein the camera is configured to detector a contrast method used according to condenser position and/or reflector position and/or light source used of the microscope.

According to an exemplary configuration of the above first aspect, the camera is connected with the microscope to exchange therewith information used to operate the microscope and/or camera.

According to an exemplary configuration of the above first aspect, the camera is mounted outside or inside a housing of the microscope.

According to an exemplary configuration of the above first aspect, the built-in processor is an embedded processor.

According to an exemplary configuration of the above first aspect, the smart photo-microscope system further comprises a monitor in connection with the camera.

According to an exemplary configuration of the above first aspect, smart photo-microscope system further comprises a monitor with an On-Screen-Display (OSD) system, the monitor being connected with the camera to display the interaction between the camera and the microscope and/or display a Graphic User Interface (GUI) for controlling the camera and/or microscope.

According to an exemplary configuration of the above first aspect, the camera is connected with the microscope through a USB bus so as to exchange the information with the microscope and/or supply power to the camera from the microscope.

According to an exemplary configuration of the above first aspect, the information includes commands for controlling light sources and/or commands for controlling electric stage sent from the camera to the microscope and/or objective encoding information and/or reflector encoding information sent from the microscope to the camera.

According to an exemplary configuration of the above first aspect, the camera is configured to acquire magnification of the microscope, and/or an image with a scale bar, and/or a multi-channel fluorescence image and/or a single-channel fluorescence image.

According to an exemplary configuration of the above first aspect, raw image data acquired by the image sensor are processed by the built-in processor to enhance the image quality.

According to an exemplary configuration of the above first aspect, the OSD system is configured to set and acquire image-related parameters and/or rename image files.

According to an exemplary configuration of the above first aspect, the smart photo-microscope system is connectable with a mouse and/or a keyboard and/or a storage device.

According to an exemplary configuration of the above first aspect, the smart photo-microscope system is connected with the mouse and/or the keyboard and/or the storage device via a USB hub.

According to an exemplary configuration of the above first aspect, the camera is configured to send an autofocus command to the microscope before an image is taken to generate a sharp camera image, and go back to the original focusing condition before the autofocus after the image is taken.

According to a second aspect of the invention, a smart photo-microscope system is provided which comprises: a microscope; a camera attached to the microscope to photograph a microscope sample and including an image sensor; and a single board computer (SBC) which includes a built-in processor and is connected with the microscope and camera to receive and process information from the microscope and/or camera, wherein the SBC is configured to detect a contrast method used according to condenser position and/or reflector position and/or light source used of the microscope. According to an exemplary configuration of the above second aspect, the SBC is connected with the microscope and camera to exchange therewith information used to operate the microscope and/or camera.

According to an exemplary configuration of the above second aspect, the camera is mounted outside or inside a housing of the microscope.

According to an exemplary configuration of the above second aspect, the built-in processor is an embedded processor.

According to an exemplary configuration of the above second aspect, the smart photo-microscope system further comprises a monitor in connection with the SBC.

According to an exemplary configuration of the above second aspect, the smart photo-microscope system further comprises a monitor with an On-Screen-Display (OSD) system, the monitor being connected with the SBC to display the interaction between the camera and the microscope through the SBC and/or display a Graphic User Interface (GUI) for controlling the camera and/or microscope.

According to an exemplary configuration of the above second aspect, the SBC is connected with the microscope through a USB bus so as to exchange the information with the microscope and/or supply power to the SBC from the microscope.

According to an exemplary configuration of the above second aspect, the information includes commands for controlling light sources and/or commands for controlling electric stage sent from the SBC to the microscope and/or objective encoding information and/or reflector encoding information sent from the microscope to the SBC.

According to an exemplary configuration of the above second aspect, the camera is configured to acquire, through the SBC, magnification of the microscope, and/or an image with a scale bar, and/or a multi-channel fluorescence image and/or a single-channel fluorescence image.

According to an exemplary configuration of the above second aspect, raw image data acquired by the image sensor are processed by the built-in processor of the SBC to enhance the image quality.

According to an exemplary configuration of the above second aspect, the OSD system is configured to set and acquire image-related parameters and/or rename image files.

According to an exemplary configuration of the above second aspect, the smart photo-microscope system is connectable with a mouse and/or a keyboard and/or a storage device.

According to an exemplary configuration of the above second aspect, the smart photo-microscope system is connected with the mouse and/or the keyboard and/or the storage device via a USB hub.

According to an exemplary configuration of the above second aspect, the SBC is configured to send an autofocus command to the microscope before an image is taken to generate a sharp camera image, and go back to the original focusing condition before the autofocus after the image is taken.

According to an exemplary configuration of the above second aspect, the SBC includes a PCB on which the built-in processor is mounted and which is positioned within a box outside the camera and microscope or is incorporated inside the microscope.

The smart photo-microscope system according to the invention, which uses a processor built in the camera or in a simple SBC to smartly control the camera and/or microscope, has at least the following advantages: there is no need to provide an additional separate computer and additional software, and less cables are used, so that space and costs can be saved; it is possible to reduce errors and increase efficiency for operations of acquiring and saving sample images in the microscope; settings of the camera and/or microscope can be adjusted and examined easily and quickly; ease of use and convenience are improved significantly compared to use of stand-alone cameras and computers.

### Brief Description of the Drawings

The above and other advantages, features and details of the invention can be obtained through the following description of embodiments thereof with reference to the drawings.
Fig. 1 is a schematic block diagram of the smart photo-microscope system according to a first embodiment of the invention.
Fig. 2 is a construction view of components of the smart photo-microscope system as shown in Fig. 1.
Fig. 3 is a schematic block diagram of the smart photo-microscope system according to a second embodiment of the invention.

### Detailed Description of the Embodiments

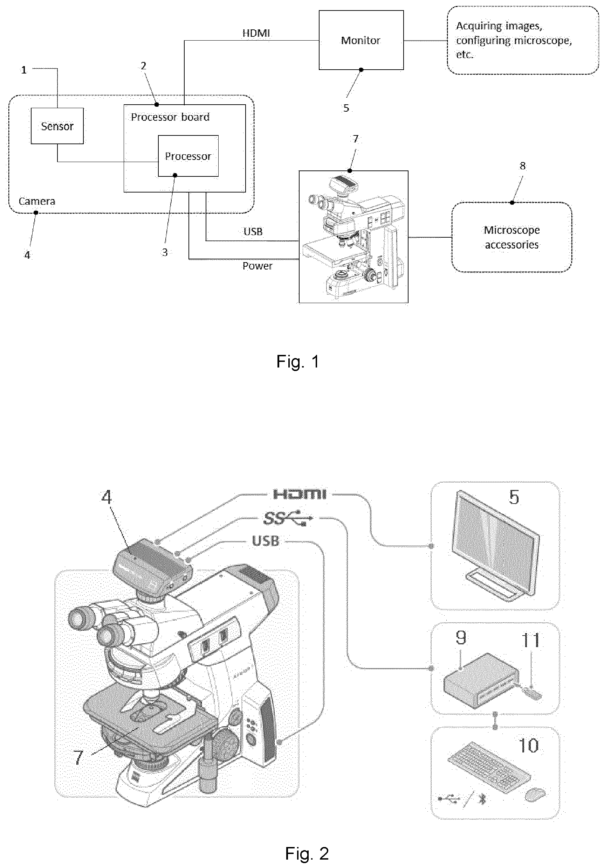

Fig. 1 shows a schematic block diagram of the smart photo-microscope system according to a first embodiment of the invention. The smart photo-microscope system includes a microscope 7 and a camera 4. The camera 4 may be attached to the microscope 7 as shown in Fig. 2 to photograph a microscope sample. The camera 4 may be mounted outside or inside a housing of the microscope 7 which may be of various types, e.g. an upright microscope, an inverted microscope or a stereo microscope. The camera 4 includes a built-in processor 3 which may be mounted on e.g. a processor board 2 that is built in the camera 4 and which may be e.g. an embedded processor. The camera 4 may be connected with the microscope 7 via the processor board 2 to receive and process information from the microscope 7, for example, exchange with the microscope 7 information used to operate the microscope 7 and/or camera 4. Such a connection may be achieved through a USB bus, such that not only information can be exchanged between the camera 4 and the microscope 4, but also the microscope 7 can supply power to the camera 4. Nevertheless, any means of communication that is able to exchange information may be used for the connection between the camera 4 and the microscope 7, such as Bluetooth, WIFI, etc. It may also be conceived that separate power supplies are used for the microscope 7 and camera 4, respectively.

The camera 4 may include an image sensor 1 to achieve its basic function of taking photos and/or videos. The image sensor is able to sense the images of a microscope sample, and may be e.g. a CMOS sensor. The image information acquired by the image sensor 1 is sent to the built-in processor 3, in which the raw image data from the image sensor 1 are processed to enhance the image quality (e.g. HDR, auto-exposure, auto-white balance etc.).

On the other hand, the built-in processor 3 is in communication with the microscope 7 by way of the above connection between the camera 4 and the microscope 7 so as to exchange information. Certain parameters of the microscope 7 may be set by the information sent from the built-in processor 3 of the camera 4 to the microscope 7. Meanwhile, the built-in processor 3 can receive and process information sent from the microscope 7 to the camera 4. For example, the microscope 7 may include microscope accessories 8, such as light source, electric stage, objective encoder, reflector encoder, motorization, condenser encoder and contrast encoder. Correspondingly, the information may include commands for controlling the light sources and/or commands for controlling the electric stage and/or position parameters for controlling operation of the microscope motor sent from the camera 4 to the microscope 7, and/or objective encoding information and/or reflector encoding information (e.g. the current position and type of the reflector) and optionally condenser encoding information or contrast encoding information (to detect the current contrast method) sent from the microscope 7 to the camera 4. In this way, the microscope 7 can be controlled from the camera 4, to switch light sources and perform other automatic functions, such as one-key multi-channel fluorescence imaging. The contrast method used, e.g. phase contrast or DIC, can be detected, e.g. via condenser position or in case of fluorescence e.g. via the reflector position in combination with the light source used. The camera can recognize this information and apply certain image processing functions to enhance image quality or to present the image in a user-friendly or commonly accepted mode. In the instance of a fluorescence image, the system would detect the fluorescence filter introduced, e.g. dual filter for DAPI and FITC fluorophore, and the fluorescence illumination light source wavelength used, e.g. 470nm. A color camera used could then switch from RGB mode to Mono mode, take an image and apply a false color (e.g. green) to the image. In a similar way, images taken in phase contrast could be processed and presented differently to the user than pure brightfield images.

Users doing routine microscopy often sit several hours in front of the microscope looking through the oculars/eyepieces to investigate samples. It feels almost like a distraction when they want to acquire an image of the sample because they have to take their eyes of the microscope and look at a computer screen displaying the live image and some software. Here they have to make sure the image is in focus before they acquire it. In practice, it happens quite often that the camera image of a microscope system is not completely at the same focus level as the image in the ocular view. Therefore, if the ocular image is focused nicely, the camera image is often not perfectly focused.

With regards to motorized functions the camera can send commands to execute a positional change of some components to facilitate certain tasks for the user. For example: to address the aforementioned problem, the focus drive (z-position) might change its position automatically before/during an image is acquired, in order to snap a sharp image (e.g. autofocus). The user would then not necessarily have to refocus the camera image by himself when an acquisition is done. With a convenient method to initiate an image acquisition, e.g. a snap button on the microscope, the user might not even have to take his eyes of the microscope at all. The camera could even read the current z-focus position before an image acquisition is initiated (ocular image in focus), perform an autofocus routine for the camera image, snap the image, and return to previously used z-focus value (delivering again an in focus ocular image).

As shown in Figs. 1 and 2, in order to facilitate setting of the microscope 7 and/or camera 4, the smart photo-microscope system according to the invention is further provided with a monitor 5, such as a display screen, which is connectable with the camera 4, so as to e.g. optionally display an On-Screen Display (OSD) system generated by the camera 4, i.e. a Graphic User Interface (GUI) for controlling the camera 4 and/or microscope 7. The monitor 5 is connected with the camera 4 (more precisely, the built-in processor 3 mounted on the processor board 2) via e.g. HDMI so as to display the OSD system, and/or display the interaction between the camera 4 and the microscope 7. What is interacted between the GUI and the camera 4 and/or microscope 7 may include image acquisition parameters of the camera 4, and/or system settings of the microscope 7 and/or camera 4, and/or images acquired by the camera 4. That is, by way of the OSD system, the user may set and acquire image-related parameters in the monitor 5, for example, adjusting the image acquisition parameters, configuring microscope parameters, viewing sample images acquired by the camera, naming and renaming image files, etc.

In the smart photo-microscope system according to the invention, the camera 4 is the control interface of the whole system by having the built-in processor 3, and is used to control and integrate parameters of various parts of the whole system. The camera 4 including the built-in processor 3 is smart enough to retrieve necessary information from the microscope 7 and send desired control commands to the microscope 7. For example, it can read out relevant information such as magnification from the microscope 7 so as to provide the acquired image with a scale bar automatically. The camera 4 may also be configured to acquire a multi-channel fluorescence image and/or a single-channel fluorescence image. The photo-microscope system can detect the positional information of the reflector encoder so as to switch on the laser with a corresponding wavelength. When a color camera is used and one chooses to acquire a fluorescence image, the camera can switch automatically from RBG mode to B/W mode; and the system can automatically give the acquired B/W image a "false" color. The camera 4 may obtain information from the whole system and stores it with the acquired image in the Metadata. The images and information can be viewed, set and modified in the monitor 5 in connection with the camera 4.

In order to further facilitate user operations, as shown in Fig. 2, the smart photo-microscope system according to the invention may further include a USB hub 9, one side of which is connected to the camera and the other side of which may be connected with a mouse and/or a keyboard 10 to control the camera 4 and/or microscope 7 in cooperation with the monitor 5 having the OSD system. The mouse and/or keyboard 10 may be connected with the USB hub 9 through USB cables or Bluetooth adaptors. Moreover, the USB hub 9 may be connected with a storage device, such as a USB drive 11 for storing images or data, and/or WIFI adaptors, so as to extend functions of the whole photo-microscope system. Moreover, the mouse and/or keyboard and/or storage device may also be connected with the smart photo-microscope system via other means than the USB hub 9.

According to the first embodiment of the invention described above, the camera is able to smartly interact with the microscope by having the built-in processor 3. As compared with the prior art, it is not necessary to provide the microscope with an additional separate computer and additional software, so that the costs can be saved. Also, the footprint of the system is reduced by having no separate computer, so that it is suitably applied within limited space, and meanwhile the ease of use and convenience of the photo-microscope system are improved.

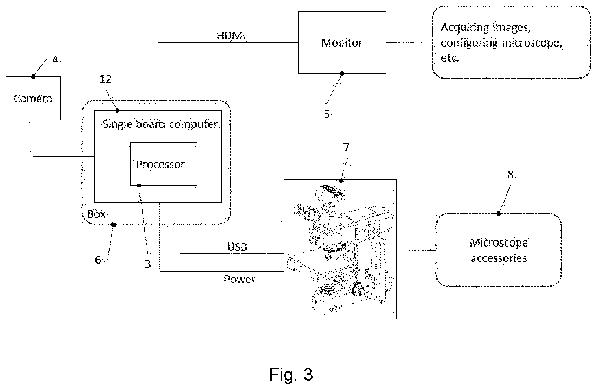

Fig. 3 shows a schematic block diagram of the smart photo-microscope system according to a second embodiment of the invention. The second embodiment differs from the first embodiment merely in that the built-in processor 3 is mounted in a single board computer (SBC) 12 instead of the camera 4. The SBC 12 is connected with both the microscope 7 and camera 4 to receive and process information from the microscope 7 and/or camera 4, for example, exchange therewith information used to operate the microscope and/or camera. The SBC 12 includes one or more PCBs on which the built-in processor 3 is mounted and which may be positioned within a box 6 outside the camera and microscope or may be incorporated inside the microscope 7.

Likewise, the SBC 12 may be connected with a monitor 5 optionally having an OSD system through e.g. HDMI, so as to display the interaction between the camera and the microscope through the SBC 12 and/or display a GUI for controlling the camera and/or microscope. The user may acquire information from the microscope and/or camera or control the microscope and/or camera through the SBC 12 by performing observations or operations on the monitor 5.

The ways of connection and information exchange between the SBC 12 and the microscope 7 are the same as those adopted between the processor board of the camera and the microscope 7 in the above first embodiment. In addition, raw image data acquired by the image sensor of the camera may also be processed by the built-in processor 3 of the SBC 12 to enhance the image quality. Also, the SBC 12 may be connected with a USB hub for extending functions of the whole photo-microscope system. Besides, other features relevant to the camera, microscope and monitor that are described with reference to the above first embodiment are also applicable to the second embodiment.

In the second embodiment, various "smart features" that are integrated in the camera by the built-in processor of the camera in the first embodiment are transferred from the camera to a separate SBC. Therefore, any kinds of cameras can become a "smart camera" like that of the first embodiment as long as it is connected with the SBC. In addition, a separate SBC is convenient to arrange various interfaces to bridge with various accessories/components of the microscope, which is helpful to extend functions of the photo-microscope system. The SBC 12 may be connected with the camera 4 through various interfaces that are compatible with both of them, such as USB, Ethernet.

The SBC is greatly simplified or reduced in terms of structure, size and cost as compared to an ordinary computer (especially PC) that is connected to the photo-microscope in the prior art, and its operation requires no dedicated software. Therefore, as with the first embodiment, the smart photo-microscope system according to the second embodiment also has the advantages of lower cost, reduced space and ease of use.

## Claims

1. A smart photo-microscope system, comprising:
a microscope (7); and
a camera (4) attached to the microscope (7) to photograph a microscope sample, the camera (4) including a built-in processor (3) and an image sensor (1), and being connected with the microscope (7) to receive and process information from the microscope (7),
**characterized in that** the camera (4) is configured to detect a contrast method used according to condenser position and/or reflector position and/or light source used of the microscope (7).

2. The smart photo-microscope system according to claim 1, wherein the camera (4) is connected with the microscope (7) to exchange therewith information used to operate the microscope (7) and/or camera (4).

3. The smart photo-microscope system according to claim 1, further comprising a monitor (5) with an On-Screen-Display (OSD) system, the monitor (5) being connected with the camera (4) to display the interaction between the camera (4) and the microscope (7) and/or display a Graphic User Interface (GUI) for controlling the camera (4) and/or microscope (7).

4. The smart photo-microscope system according to any one of claims 1 to 3, wherein the camera (4) is connected with the microscope (7) through a USB bus so as to exchange the information with the microscope (7) and/or supply power to the camera (4) from the microscope (7).

5. The smart photo-microscope system according to any one of claims 1 to 3, wherein the information includes commands for controlling light sources and/or commands for controlling electric stage sent from the camera (4) to the microscope (7) and/or objective encoding information and/or reflector encoding information sent from the microscope (7) to the camera (4).

6. The smart photo-microscope system according to any one of claims 1 to 3, wherein the camera (4) is configured to acquire magnification of the microscope (7), and/or an image with a scale bar, and/or a multi-channel fluorescence image and/or a single-channel fluorescence image.

7. The smart photo-microscope system according to any one of claims 1 to 3, wherein the camera (4) is configured to send an autofocus command to the microscope (7) before an image is taken to generate a sharp camera (4) image, and go back to the original focusing condition before the autofocus after the image is taken.

8. A smart photo-microscope system, comprising:
a microscope (7);
a camera (4) attached to the microscope (7) to photograph a microscope sample and including an image sensor (1); and
a single board computer (SBC) which includes a built-in processor (3) and is connected with the microscope (7) and camera (4) to receive and process information from the microscope (7) and/or camera (4)
**characterized in that** the SBC (12) is configured to detect a contrast method used according to condenser position and/or reflector position and/or light source used of the microscope (7).

9. The smart photo-microscope system according to claim 8, wherein the SBC (12) is connected with the microscope (7) and camera (4) to exchange therewith information used to operate the microscope (7) and/or camera (4).

10. The smart photo-microscope system according to claim 8, further comprising a monitor (5) with an On-Screen-Display (OSD) system, the monitor (5) being connected with the SBC (12) to display the interaction between the camera (4) and the microscope (7) through the SBC and/or display a Graphic User Interface (GUI) for controlling the camera (4) and/or microscope (7).

11. The smart photo-microscope system according to any one of claims 8 to 10, wherein the SBC (12) is connected with the microscope (7) through a USB bus so as to exchange the information with the microscope (7) and/or supply power to the SBC (12) from the microscope (7).

12. The smart photo-microscope system according to any one of claims 8 to 10, wherein the information includes commands for controlling light sources and/or commands for controlling electric stage sent from the SBC (12) to the microscope (7) and/or objective encoding information and/or reflector encoding information sent from the microscope (7) to the SBC (12).

13. The smart photo-microscope system according to any one of claims 8 to 10, wherein the camera (4) is configured to acquire, through the SBC (12), magnification of the microscope (7), and/or an image with a scale bar, and/or a multi-channel fluorescence image and/or a single-channel fluorescence image.

14. The smart photo-microscope system according to claim 3 or 10, wherein the OSD system is configured to set and acquire image-related parameters and/or rename image files.

15. The smart photo-microscope system according to any one of claims 8 to 10, wherein the SBC (12) is configured to send an autofocus command to the microscope (7) before an image is taken to generate a sharp camera (4) image, and go back to the original focusing condition before the autofocus after the image is taken.

16. The smart photo-microscope system according to any one of claims 8 to 10, wherein the SBC (12) includes a PCB on which the built-in processor (3) is mounted and which is positioned within a box (6) outside the camera (4) and microscope (7) or is incorporated inside the microscope (7).

## Patentansprüche

1. Ein intelligentes Fotomikroskopsystem, umfassend:
ein Mikroskop (7); und
eine an dem Mikroskop (7) angebrachte Kamera (4), um eine Mikroskopprobe zu fotografieren, wobei die Kamera (4) einen eingebauten Prozessor (3) und einen Bildsensor (1) enthält und mit dem Mikroskop (7) verbunden ist, um Informationen von dem Mikroskop (7) zu empfangen und zu verarbeiten,
**dadurch gekennzeichnet, dass** die Kamera (4) ausgebildet ist, um ein verwendetes Kontrastverfahren in Abhängigkeit von der Position des Kondensors und/oder der Position des Reflektors und/oder der vom Mikroskop (7) verwendeten Lichtquelle (7) zu detektieren.

2. Intelligentes Fotomikroskopsystem nach Anspruch 1, wobei die Kamera (4) mit dem Mikroskop (7) verbunden ist, um mit diesem Informationen auszutauschen, die zum Betrieb des Mikroskops (7) und/oder der Kamera (4) verwendet werden.

3. Intelligentes Fotomikroskopsystem nach Anspruch 1, ferner umfassend einen Monitor (5) mit einem On-Screen-Display-System (OSD), wobei der Monitor (5) mit der Kamera (4) verbunden ist, um die Interaktion zwischen der Kamera (4) und dem Mikroskop (7) anzuzeigen und/oder eine grafische Benutzeroberfläche (GUI) zur Steuerung der Kamera (4) und/oder des Mikroskops (7) anzuzeigen.

4. Intelligentes Fotomikroskopsystem nach einem der Ansprüche 1 bis 3, wobei die Kamera (4) mit dem Mikroskop (7) über einen USB-Bus verbunden ist, um die Informationen mit dem Mikroskop (7) auszutauschen und/oder die Kamera (4) vom Mikroskop (7) mit Strom zu versorgen.

5. Intelligentes Fotomikroskopsystem nach einem der Ansprüche 1 bis 3, wobei die Informationen Befehle zur Steuerung von Lichtquellen und/oder Befehle zur Steuerung des elektrischen Tisches, die von der Kamera (4) an das Mikroskop (7) gesendet werden, und/oder Objektivkodierungsinformationen und/oder Reflektorkodierungsinformationen, die vom Mikroskop (7) an die Kamera (4) gesendet werden, umfassen.

6. Intelligentes Fotomikroskopsystem nach einem der Ansprüche 1 bis 3, wobei die Kamera (4) so ausgebildet ist, dass sie eine Vergrößerung des Mikroskops (7) und/oder ein Bild mit einem Maßstabsbalken und/oder ein Mehrkanal-Fluoreszenzbild und/oder ein Einkanal-Fluoreszenzbild erfasst.

7. Intelligentes Fotomikroskopsystem nach einem der Ansprüche 1 bis 3, wobei die Kamera (4) so ausgebildet ist, dass sie vor der Aufnahme eines Bildes einen Autofokusbefehl an das Mikroskop (7) sendet, um ein scharfes Kamerabild (4) zu erzeugen, und nach der Aufnahme des Bildes zum ursprünglichen Fokussierungszustand vor dem Autofokus zurückkehrt.

8. Ein intelligentes Fotomikroskopsystem, umfassend:
ein Mikroskop (7);
eine an dem Mikroskop (7) angebrachte und einen Bildsensor (1) enthaltende Kamera (4), um eine Mikroskopprobe zu fotografieren; und
einen Einplatinencomputer (SBC), der einen eingebauten Prozessor (3) enthält und mit dem Mikroskop (7) und der Kamera (4) verbunden ist, um Informationen von dem Mikroskop (7) und/oder der Kamera (4) zu empfangen und zu verarbeiten
**dadurch gekennzeichnet, dass** der SBC (12) ausgebildet ist, um das verwendete HOa-Kontrastverfahren in Abhängigkeit von der Position des Kondensors und/oder der Position des Reflektors und/oder der vom Mikroskop (7) verwendeten Lichtquelle (7) zu detektieren.

9. Intelligentes Fotomikroskopsystem nach Anspruch 8, wobei der SBC (12) mit dem Mikroskop (7) und der Kamera (4) verbunden ist, um mit diesen Informationen auszutauschen, die zum Betrieb des Mikroskops (7) und/oder der Kamera (4) verwendet werden.

10. Intelligentes Fotomikroskopsystem nach Anspruch 8, ferner umfassend einen Monitor (5) mit einem On-Screen-Display-System (OSD), wobei der Monitor (5) mit dem SBC (12) verbunden ist, um die Interaktion zwischen der Kamera (4) und dem Mikroskop (7) über den SBC anzuzeigen und/oder eine grafische Benutzeroberfläche (GUI) zur Steuerung der Kamera (4) und/oder des Mikroskops (7) anzuzeigen.

11. Intelligentes Fotomikroskopsystem nach einem der Ansprüche 8 bis 10, wobei der SBC (12) mit dem Mikroskop (7) über einen USB-Bus verbunden ist, um die Informationen mit dem Mikroskop (7) auszutauschen und/oder den SBC (12) vom Mikroskop (7) mit Strom zu versorgen.

12. Intelligentes Fotomikroskopsystem nach einem der Ansprüche 8 bis 10, wobei die Informationen Befehle zur Steuerung von Lichtquellen und/oder Befehle zur Steuerung des elektrischen Tisches, die von dem SBC (12) an das Mikroskop (7) gesendet werden, und/oder Objektivkodierungsinformationen und/oder Reflektorkodierungsinformationen, die vom Mikroskop (7) an den SBC (12) gesendet werden, umfassen.

13. Intelligentes Fotomikroskopsystem nach einem der Ansprüche 8 bis 10, wobei die Kamera (4) so ausgebildet ist, dass sie über den SBC (12) eine Vergrößerung des Mikroskops (7) und/oder ein Bild mit einem Maßstabsbalken und/oder ein Mehrkanal-Fluoreszenzbild und/oder ein Einkanal-Fluoreszenzbild erfasst.

14. Intelligentes Fotomikroskopsystem nach Anspruch 3 oder 10, wobei das OSD-System so ausgebildet ist, dass es bildbezogene Parameter einstellen und erfassen und/oder Bilddateien umbenennen kann.

15. Intelligentes Fotomikroskopsystem nach einem der Ansprüche 8 bis 10, wobei der SBC (12) so ausgebildet ist, dass er vor der Aufnahme eines Bildes einen Autofokusbefehl an das Mikroskop (7) sendet, um ein scharfes Kamerabild (4) zu erzeugen, und nach der Aufnahme des Bildes zum ursprünglichen Fokussierungszustand vor dem Autofokus zurückkehrt.

16. Intelligentes Fotomikroskopsystem nach einem der Ansprüche 8 bis 10, wobei der SBC (12) eine Leiterplatte enthält, auf welcher der eingebaute Prozessor (3) angebracht ist und die in einem Gehäuse (6) außerhalb der Kamera (4) und des Mikroskops (7) angeordnet ist oder in das Mikroskop (7) eingebaut ist.

## Revendications

1. Système de microscope photographique intelligent, comprenant :
un microscope (7); et
un appareil photographique (4) fixé contre le microscope (7) pour photographier un échantillon de microscope, l'appareil photographique (4) incluant un processeur embarqué (3) et un capteur d'image (1), et relié au microscope (7) pour recevoir et traiter une information depuis le microscope (7),
**caractérisé en ce que** l'appareil photographique (4) est configuré pour détecter une méthode de contraste utilisée en fonction d'une position de condenseur et/ou d'une position de réflecteur et/ou d'une source de lumière utilisée du microscope (7).

2. Système de microscope photographique intelligent selon la revendication 1, dans lequel l'appareil photographique (4) est relié au microscope (7) pour échanger avec celui-ci une information utilisée pour exploiter le microscope (7) et/ou l'appareil photographique (4).

3. Système de microscope photographique intelligent selon la revendication 1, comprenant en outre un moniteur (5) avec un système d'Affichage À l'Écran (*On-Screen Display,* OSD), le moniteur (5) étant relié à l'appareil photographique (4) pour afficher l'interaction entre l'appareil photographique (4) et le microscope (7) et/ou afficher une Interface Utilisateur Graphique (*Graphic User Interface,* GUI) pour commander l'appareil photographique (4) et/ou le microscope (7).

4. Système de microscope photographique intelligent selon l'une quelconque des revendications 1 à 3, dans lequel l'appareil photographique (4) est relié au microscope (7) via un bus USB de manière à échanger l'information avec le microscope (7) et/ou fournir une énergie à l'appareil photographique (4) depuis le microscope (7).

5. Système de microscope photographique intelligent selon l'une quelconque des revendications 1 à 3, dans lequel l'information inclut des instructions pour commander des sources de lumière et/ou des instructions pour commander un palier électrique envoyées depuis l'appareil photographique (4) vers le microscope (7) et/ou une information de codage objective et/ou une information de codage de réflecteur envoyées depuis le microscope (7) vers l'appareil photographique (4).

6. Système de microscope photographique intelligent selon l'une quelconque des revendications 1 à 3, dans lequel l'appareil photographique (4) est configuré pour acquérir un grossissement du microscope (7), et/ou une image avec une barre d'échelle, et/ou une image par fluorescence multi-canaux et/ou une image par fluorescence à canal unique.

7. Système de microscope photographique intelligent selon l'une quelconque des revendications 1 à 3, dans lequel l'appareil photographique (4) est configuré pour envoyer une instruction de mise au point automatique vers le microscope (7) avant qu'une image ne soit prise afin de produire une image d'appareil photographique (4) nette, puis retourner vers la condition de mise au point d'origine avant la mise au point automatique après que l'image a été prise.

8. Système de microscope photographique intelligent, comprenant :
un microscope (7);
un appareil photographique (4) fixé contre le microscope (7) pour photographier un échantillon de microscope et incluant un capteur d'image (1); et
un ordinateur monocarte (*single board computer,* SBC) qui inclut un processeur embarqué (3) et est relié au microscope (7) et à l'appareil photographique (4) pour recevoir et traiter une information depuis le microscope (7) et/ou l'appareil photographique (4)
**caractérisé en ce que** le SBC (12) est configuré pour détecter une méthode de contraste utilisée en fonction d'une position de condenseur et/ou d'une position de réflecteur et/ou d'une source de lumière utilisée du microscope (7).

9. Système de microscope photographique intelligent selon la revendication 8, dans lequel le SBC (12) est relié au microscope (7) et à l'appareil photographique (4) pour échanger avec ceux-ci une information utilisée pour exploiter le microscope (7) et/ou l'appareil photographique (4).

10. Système de microscope photographique intelligent selon la revendication 8, comprenant en outre un moniteur (5) avec un système d'Affichage À l'Écran (OSD), le moniteur (5) étant relié au SBC (12) pour afficher l'interaction entre l'appareil photographique (4) et le microscope (7) via le SBC et/ou afficher une Interface Utilisateur Graphique (GUI) pour commander l'appareil photographique (4) et/ou le microscope (7).

11. Système de microscope photographique intelligent selon l'une quelconque des revendications 8 à 10, dans lequel le SBC (12) est relié au microscope (7) via un bus USB de manière à échanger l'information avec le microscope (7) et/ou fournir une énergie au SBC (12) depuis le microscope (7).

12. Système de microscope photographique intelligent selon l'une quelconque des revendications 8 à 10, dans lequel l'information inclut des instructions pour commander des sources de lumière et/ou des instructions pour commander un palier électrique envoyées depuis le SBC (12) vers le microscope (7) et/ou une information de codage objective et/ou une information de codage de réflecteur envoyées depuis le microscope (7) vers le SBC (12).

13. Système de microscope photographique intelligent selon l'une quelconque des revendications 8 à 10, dans lequel l'appareil photographique (4) est configuré pour acquérir, via le SBC (12), un grossissement du microscope (7), et/ou une image avec une barre d'échelle, et/ou une image par fluorescence multi-canaux et/ou une image par fluorescence à canal unique.

14. Système de microscope photographique intelligent selon l'une quelconque des revendication 3 à 10, dans lequel le système OSD est configuré pour régler et acquérir des paramètres relatifs à une image et/ou renommer des fichiers d'images.

15. Système de microscope photographique intelligent selon l'une quelconque des revendications 8 à 10, dans lequel le SBC (12) est configuré pour envoyer une instruction de mise au point automatique vers le microscope (7) avant qu'une image ne soit prise afin de produire une image d'appareil photographique (4) nette, puis retourner vers la condition de mise au point d'origine avant la mise au point automatique après que l'image a été prise.

16. Système de microscope photographique intelligent selon l'une quelconque des revendications 8 à 10, dans lequel le SBC (12) inclut une carte de circuit imprimé sur laquelle est monté le processeur embarqué (3) et qui est positionnée à l'intérieur d'un boîtier (6) à l'extérieur de l'appareil photographique (4) et du microscope (7) ou est incorporée à l'intérieur du microscope (7).
